# EUROPEAN PATENT APPLICATION

(11) **EP 4 628 227 A1**
(43) Date of publication of application: **08.10.2025**
(21) Application number: 24875779.1
(22) Date of filing: 28.06.2024

(54) **FEEDING DEVICE, FEEDING METHOD AND BATTERY PRODUCTION LINE**

(30) Priority: 19.02.2024 CN 202410183261
(71) Applicant: Contemporary Amperex Technology Co., Limited, Ningde, Fujian 352100 (CN)
(72) Inventor: SUN, Zhiqiang, Ningde, Fujian 352100 (CN); GONG, Xueqing, Ningde, Fujian 352100 (CN); CHEN, Fanke, Ningde, Fujian 352100 (CN); SUN, Yanlin, Ningde, Fujian 352100 (CN); ZHANG, Antao, Ningde, Fujian 352100 (CN)
(74) Representative: Ran, Handong
(86) International application number: PCT/CN2024/102533
(87) International publication number: WO 2025/175684

(57) **Abstract**

The present application provides a material feeding apparatus, a material feeding method, and a battery production line, and belongs to the technical field of batteries. The material feeding apparatus includes a frame, a material feeding tray, and a fool-proof mechanism. The frame includes a base; the material feeding tray is arranged on the base and is movable along a horizontal first direction with respect to the base, the material feeding tray includes a plurality of material feeding positions, and specifications of workpieces carried by at least two of the material feeding positions are different; and the fool-proof mechanism is arranged correspondingly to at least one material feeding position on the material feeding tray and is configured to separately limit the specifications of the workpieces carried by the material feeding positions. By the arrangement of the fool-proof mechanism, more accurate material feeding can be achieved, and the material feeding efficiency can be improved.

## Description

### CROSS-REFERENCE

The present application refers to Chinese Patent Application No. 202410183261.5, entitled "MATERIAL FEEDING APPARATUS, MATERIAL FEEDING METHOD, AND BATTERY PRODUCTION LINE", filed on February 19, 2024, which is incorporated herein by reference in its entirety.

### TECHNICAL FIELD

The present application relates to the technical field of batteries, and in particular, to a material feeding apparatus, a material feeding method, and a battery production line.

### BACKGROUND

Energy conservation and emission reduction are the key to sustainable development of the automobile industry. Electric vehicles have become an important part for the sustainable development of the automobile industry due to their energy-saving and environmental protection advantages. For the electric vehicles, the battery technology is an important factor in their development.

For a large-scale battery pack, for example, an energy storage battery, building frameworks for housing batteries often need to be constructed, which needs to provide a large number of workpieces with different specifications. Due to a large number of workpieces involved and the similarity in structural dimensions of certain workpieces, disordered or incorrect material feeding may occur during simultaneous material feeding of a plurality of workpieces, thereby compromising the subsequent installation efficiency.

### SUMMARY

The present application aims to solve at least one of the technical problems existing in the background. Therefore, an objective of the present application is to provide a material feeding apparatus, a material feeding method, and a battery production line, so as to improve the accuracy of material feeding.

An embodiment of a first aspect of the present application provides a material feeding apparatus, which includes a frame, a material feeding tray, and a fool-proof mechanism. The frame includes a base; the material feeding tray is arranged on the base and is movable along a horizontal first direction with respect to the base, the material feeding tray includes a plurality of material feeding positions, and specifications of workpieces carried by at least two of the material feeding positions are different; and the fool-proof mechanism is located at at least one end of the material feeding tray along the first direction, and is configured to limit the specifications of the workpieces carried by the plurality of material feeding positions, respectively.

In the technical solutions of the embodiment of the present application, by arranging the fool-proof mechanism, the specifications of the workpieces at each material feeding position may be limited, and the workpiece which is not in line with the preset specification of the material feeding position is identified, such that the correct workpiece may be fed with materials via the material feeding position corresponding to the workpiece, thus disordered material feeding when a plurality of workpieces are fed with materials simultaneously may be avoided to a certain extent, thereby improving the accuracy and the efficiency of material feeding when the workpieces with a plurality of specifications are fed with materials simultaneously.

In some embodiments, the fool-proof mechanism includes a plurality of dimension limiting members arranged correspondingly to the plurality of material feeding positions, the dimension limiting members being configured to limit dimensions of the workpieces at the material feeding positions along a second direction perpendicular to the first direction. Therefore, the dimension limiting members are arranged, such that the workpieces may be distinguished and screened according to the dimension difference of different workpieces, thereby improving the uniformity and the accuracy of the material feeding dimensions of the workpieces, and making the reliability higher.

In some embodiments, the dimension limiting member includes a limiting block, the second direction is a vertical direction, and the limiting block is located directly above a movement path of the workpiece at the corresponding material feeding position. Therefore, the heights of different workpieces are limited by the limiting blocks, which reduces the number of parts required by dimension limiting, and is beneficial to the simplification of the structure of the dimension limiting to a certain extent.

In some embodiments, the limiting block is fixedly connected with the frame in a manner of being adjustable along the vertical direction. Therefore, the manner in which the limiting block is connected with the frame is set to be adjustable along the vertical direction, such that the corresponding adjustment may be carried out more conveniently according to the dimension of the workpiece at the corresponding material feeding position, the workpiece is fed with materials more flexibly, and the application range is wider.

In some embodiments, the dimension limiting member includes a touch sensor, and the touch sensor includes a contact component and a contact switch, wherein the contact component is movably connected with the frame and is rotatable around a connection point with the frame under the action of an external force, and the contact switch is configured to transmit a touch signal according to a position of the contact component with respect to the connection point. In the case where two workpieces have similar heights, an incorrect workpiece, when reaching a material discharging port, may push the touch sensor to rotate by a certain angle and transmit a touch signal, such that the incorrect workpiece with the similar height is prevented from being pushed violently. Therefore, the touch sensor is selected to be used as a dimension limiting member, and different workpieces may be distinguished and screened according to the heights of the different workpieces. The touch sensor triggers an electric signal based on a structural feature of the incorrect workpiece, so as to limit the dimension specification of the workpiece, with high detection precision and detection efficiency, and the state whether incorrect material feeding occurs may be fed back to the material feeding apparatus in time, which is beneficial to the electrification of the material feeding apparatus.

In some embodiments, the dimension limiting member further includes a limiting block, the limiting block and the touch sensor are located directly above a movement path of the same material feeding position with respect to the base, and a lowest height of the limiting block is lower than a lowest height of the touch sensor. Therefore, the limiting block and the touch sensor are arranged simultaneously, such that the material feeding apparatus may be prevented from incorrect material discharging to a certain extent, which further improves the reliability of the material feeding apparatus.

In some embodiments, the fool-proof mechanism further includes a feature detecting unit. The feature detecting unit is located at an end part of the material feeding position along the first direction. The feature detecting unit is configured to detect whether shape features of the workpieces located at the material feeding position are the same. Therefore, the feature detecting units are provided, so as to detect from another dimension whether the shape of the workpiece at the material feeding position is in line with the specification requirement, find abnormal incorrect workpieces in time, and further improve the reliability of the material feeding apparatus.

In some embodiments, the feature detecting unit includes a first transmitting part and a first receiving part, the first transmitting part being configured to transmit a first detection signal emitted to a periphery of a preset edge position of the workpiece at the material feeding position, and the first receiving part being configured to receive the first detection signal. Therefore, by selecting the form of the feature detecting unit as the form of the signal transmitting part and the signal receiving part, the feature of the workpiece may be detected in real time, and meanwhile, the accuracy and the reliability of detection are high, and thus false positives or false negatives that may occur during feature detection may be reduced to a certain extent.

In some embodiments, the feature detecting unit further includes a first reflecting part configured to reflect the first detection signal. The first transmitting part and the first receiving part are both located at an end of the material feeding position along the first direction. The first reflecting part is located at the other end of the material feeding position along the first direction. Therefore, the first reflecting part is further arranged, such that the shape features of all the workpieces at the material feeding position may be efficiently judged to be the same, and thus the efficiency and the accuracy of feature detection are improved.

In some embodiments, the fool-proof mechanism further includes a fixing seat, and the fixing seat is provided with a clamping groove configured to be clamped with a workpiece; any of the material feeding positions is provided with at least one fixing seat, and dimensions of the clamping grooves of the fixing seats located at the same material feeding position are the same. Therefore, an interface form in which the fixing seat is clamped with the workpiece is set differentially, such that the incorrect workpiece may be prevented from being placed at the incorrect material feeding position to a certain extent, and thus the reliability of the material feeding apparatus is further improved.

In some embodiments, the material feeding apparatus further includes a material shortage detecting unit. The material shortage detecting unit is located at an end part of the material feeding position along the first direction. The material shortage detecting unit is configured to detect whether the material feeding position is short of materials. Therefore, the material shortage detecting unit is arranged, such that the condition of a material shortage of the workpiece may be found in time, and the missing workpiece may be supplemented in time, which is beneficial to keeping the continuous operation of a production line and improving the production efficiency.

In some embodiments, the material shortage detecting unit includes a second transmitting part and a second receiving part, the second transmitting part being configured to transmit a second detection signal emitted to a position of the workpiece at the material feeding position, and the second receiving part being configured to receive the second detection signal. Therefore, by selecting the form of the material shortage detecting unit as the form of the signal transmitting part and the signal receiving part, the feature of the workpiece may be detected in real time, and meanwhile, the accuracy and the reliability of detection are high, and thus the possibility of false positives or false negatives during material shortage detection may be reduced to a certain extent.

In some embodiments, the material shortage detecting unit further includes a reflecting part configured to reflect the second detection signal; where the second transmitting part and the second receiving part are both located at an end of the material feeding position along the first direction, and the second reflecting part is located at the other end of the material feeding position along the first direction. Therefore, when the second receiving part receives the second detection signal reflected by the second reflecting part, it indicates that no workpiece capable of blocking the second detection signal is provided at the material feeding position, so that the number of workpieces at the material feeding position may be efficiently judged to be zero, and thus the efficiency of material shortage detection is improved.

In some embodiments, the material feeding tray includes a pushing state where the material feeding tray is located directly above the base and a pulling state where the material feeding tray moves along the first direction and is at least partially offset from the base; and the material feeding apparatus further includes a position sensor, the position sensor being fixedly connected to the base and being configured to detect the state of the material feeding tray. Therefore, when the material feeding tray is in a pulling state, the space around the material feeding tray is wide, which is beneficial to adding workpieces to the material feeding tray. Meanwhile, the material feeding apparatus is provided with a position sensor which is configured to detect the state of the material feeding tray, such that the material feeding apparatus can acquire the position state of the material feeding tray to enable the material feeding apparatus to carry out a corresponding operation.

In some embodiments, the position sensor includes a first proximity switch and a second proximity switch, the first proximity switch and the second proximity switch being located at both ends of the base along the first direction, respectively. Therefore, the form of the position sensor is selected as two proximity switches, and the proximity switches can judge the position state of the material feeding tray without contacting the material feeding tray, such that the proximity switches are not subject to wear, offering high stability and reliability, enabling long-term stable operation, and reducing the frequency of maintenance and replacement.

An embodiment of a second aspect of the present application provides a battery production line, which includes the material feeding apparatus according to the above embodiments and an alarm unit in signal connection with the material feeding apparatus, where the alarm unit is configured to transmit an alarm signal in response to a situation that the material feeding apparatus is in an abnormal state; and the abnormal state includes one or more of an abnormal position of the material feeding position, an incorrect material feeding indication of the fool-proof mechanism, and a material shortage of the material feeding position. Therefore, by arrangement of the alarm unit, the operators can know the abnormal condition of the material feeding apparatus in time, which is beneficial to keeping the continuous operation of the production line and improving the production efficiency.

An embodiment of a third aspect of the present application provides a material feeding method, which includes: pre-adjusting the fool-proof mechanism of the material feeding apparatus according to the specifications of the workpieces, where the material feeding apparatus is the material feeding apparatus of the above embodiments; moving the material feeding tray out of the base along the first direction; placing the workpieces at the material feeding positions of the material feeding tray; and moving the material feeding tray into the base. Therefore, workpieces with different specifications may be accurately provided to the material feeding apparatus through the above steps, and it is possible to judge whether incorrect material feeding occurs through the fool-proof mechanism.

In some embodiments, the material feeding method further includes: in response to the incorrect material feeding indication of the fool-proof mechanism of the material feeding apparatus, re-moving the material feeding tray out of the base along the first direction; replacing an incorrect workpiece on the material feeding tray with a correct workpiece; and re-moving the material feeding tray into the base. Therefore, the situation that incorrect material feeding occurs may be detected efficiently, thus preventing incorrect workpieces from flowing into the subsequent production or assembly process.

In some embodiments, the material feeding method further includes: in response to a correct material feeding indication of the fool-proof mechanism of the material feeding apparatus, transferring the workpiece in the material feeding apparatus to a preset position; detecting whether the material feeding position is short of materials; and in response to the material shortage of the material feeding position, supplementing a workpiece with a corresponding specification to the material feeding position.

The above description is only an overview of the technical solutions of the present application. To more clearly understand the technical means of the present application to enable implementation in accordance with the content of the specification and to make the above and other objectives, features, and advantages of the present application more obvious and easy to understand, the detailed description of the present application is provided below.

### BRIEF DESCRIPTION OF THE DRAWINGS

In the accompanying drawings, unless otherwise specified, the same reference numerals across multiple accompanying drawings indicate the same or similar components or elements. The accompanying drawings are not necessarily drawn to scale. It should be understood that the accompanying drawings depict only some embodiments of the present application and are therefore not to be considered as limiting the scope of the present application. To more clearly illustrate the technical solutions in the embodiments of the present application, the drawings required for illustrating the embodiments of the present application are briefly described below. Apparently, the drawings in the following description illustrate merely some embodiments of the present application, and those of ordinary skills in the art may still derive other drawings from these drawings without creative efforts.
FIG. 1 is a schematic diagram of a material feeding apparatus according to some embodiments of the present application;
FIG. 2 is a front view of a material feeding apparatus according to some embodiments of the present application;
FIG. 3 is a side view of a material feeding apparatus according to some embodiments of the present application;
FIG. 4 is a top view of a material feeding apparatus according to some embodiments of the present application;
FIG. 5 is a structural block diagram of a battery production line according to some embodiments of the present application;
FIG. 6 is a schematic diagram of a material feeding method according to some embodiments of the present application; and
FIG. 7 is a schematic diagram of a material feeding flow according to some embodiments of the present application.

Description of the reference numerals:
a battery production line 1, a material feeding apparatus 10, a workpiece 20, an alarm unit 30;
a frame 100, a base 110;
a material feeding tray 200, a material feeding position 210;
a fool-proof mechanism 300, a dimension limiting member 310, a limiting block 311, a touch sensor 312, a contact component 3121, a contact switch 3122, a feature detecting unit 320, a first transmitting part 321, a first receiving part 322, a first reflecting part 323, a fixing seat 330, a clamping groove 331, a material shortage detecting unit 340, a second transmitting part 341, a second receiving part 342, a second reflecting part 343, a position sensor 350, a first proximity switch 351, a second proximity switch 352;
a material feeding method 500;
a first direction D1, a second direction D2, a third direction D3.

### DETAILED DESCRIPTION

Embodiments of the technical solutions of the present application will be described in detail below with reference to the drawings. The following embodiments are only for illustrating the technical solutions of the present application more clearly, and therefore are only exemplary and do not limit the scope of the present application.

Unless otherwise defined, all technical and scientific terms used herein have the same meaning as commonly understood by those skilled in the technical field to which the present application belongs. The terms used herein are only for illustrating the specific embodiments, rather than limiting the present application. The terms "comprise", "include" and "provided with", and any variations thereof in the specification and claims of the present application and the above-mentioned drawing description encompass non-exclusive inclusions.

In the description of the embodiments of the present application, technical terms such as "first", "second", and the like are only used to distinguish different objects and should not be interpreted as indicating or implying the relative importance or implicitly indicating the number, specific order, or primary and secondary relationship of the indicated technical features. In the description of the embodiments of the present application, unless otherwise specifically defined, "a plurality of" means two or more than two.

Reference in the present application to "embodiment" means that a particular feature, structure, or feature described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/" .

In the description of the embodiments of the present application, the term "a plurality of" refers to more than two (including two). Similarly, "multiple groups" refers to more than two groups (including two groups), and "multiple pieces" refers to more than two pieces (including two pieces).

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential" and the like indicating directional or positional relationships are based on the directional or positional relationships shown in the drawings. They are merely for the convenience of describing the embodiments of the present application and simplifying the description, and are not intended to indicate or imply that the apparatuses or elements referred to must have specific directions, be constructed and operated in specific directions. Therefore, these terms should not be construed as limitations on the embodiments of the present application.

In the description of the embodiments of the present application, unless otherwise clearly specified and defined, the technical terms "install", "interconnect", "connect", "fix", and the like should be interpreted in their broad senses. For example, "connect" may be "fixedly connect", "detachably connect", or "integrally connect"; "mechanically connect" or "electrically connect"; or "directly interconnect", "indirectly interconnect through an intermediate", "communication between interiors of two elements", or "interaction between two elements". For those of ordinary skill in the art, the specific meanings of the above terms in the embodiments of the present application can be interpreted according to the specific condition.

At present, judging from the development of the market situation, the application of power batteries is becoming broader. Power batteries are not only applied in energy storage power systems such as hydropower, thermal power, wind power and solar power stations, but are also widely applied in electric transportation vehicles such as electric bicycles, electric motorcycles, electric cars, as well as in military equipment, aerospace, and other fields. As the application of the power batteries becomes broader, the market demand thereof is also increasing.

In the process of constructing a building frame for supporting a battery, a large number of parts need to be installed, and there are various specifications. As the structural dimensions of certain parts may be high in similarity, disordered or incorrect material feeding may occur during simultaneous material feeding of a plurality of workpieces with different specifications.

In order to solve the above problems, an embodiment of the present application provides a material feeding apparatus. A plurality of material feeding positions carrying different specifications and a fool-proof mechanism limiting the specifications of the workpieces carried by the plurality of material feeding positions are arranged in the material feeding apparatus. The fool-proof mechanism is configured to limit the specifications of the workpieces carried by the plurality of material feeding positions, respectively. In this way, the workpieces of various specifications may be fed with materials synchronously, disordered or incorrect material feeding occurring in the process may be reduced, and the accuracy and the efficiency of material feeding may be improved.

The material feeding apparatus disclosed in the embodiment of the present application may be applied to various scenarios in which workpieces with various specifications are fed with materials, including but not limited to feeding materials to the framework supported by the energy storage battery.

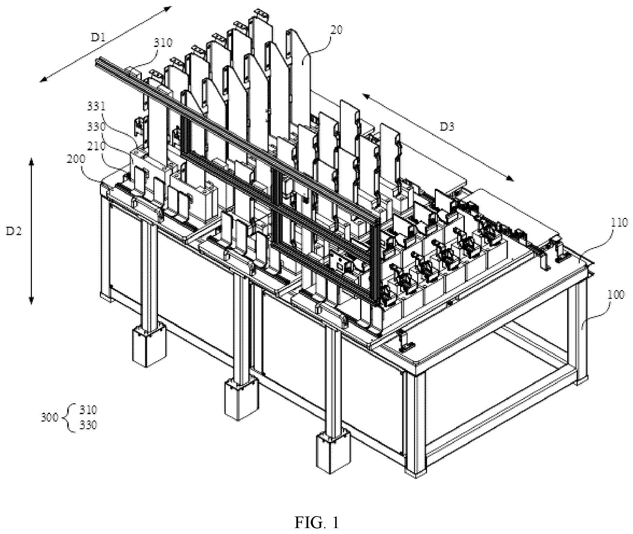

Referring to FIG. 1, FIG. 1 is a schematic diagram of a material feeding apparatus according to some embodiments of the present application. The material feeding apparatus 10 includes a frame 100, material feeding trays 200, and fool-proof mechanisms 300. The frame 100 includes a base 110. The material feeding trays 200 are arranged on the base 110 and are movable along a horizontal first direction D1 with respect to the base 110. The material feeding tray 200 includes a plurality of material feeding positions 210, and specifications of workpieces 20 carried by at least two of the material feeding positions 210 are different. The fool-proof mechanism 300 is arranged correspondingly to at least one material feeding position on the material feeding tray 200, and the fool-proof mechanism 300 is configured to separately limit the specifications of the workpieces 20 carried by the material feeding positions 210.

The frame 100, as the base support structure for the entire material feeding apparatus 10, is configured to provide a structural support and an installing position for each component. The surface of the base 110 is generally rectangular to provide a generally flat installing surface for the material feeding tray 200. The width direction of the base 110 is a first direction D1, and the length direction of the base 110 is a third direction D3. The frame 100 may further include structures for supporting or installing other components. The structures may be integrally connected with the base 110 or completely separate and independent from the base 110 to satisfy the installing or supporting requirements of different components.

The material feeding tray 200 is arranged above the base 110 and is movably connected with the base 110. The material feeding tray 200 may move back and forth along the first direction D1 with respect to the base 110, such that the material feeding apparatus 10 may push out the workpiece 20 to be fed with materials along the first direction D1, thereby completing the material feeding process of the workpiece 20. In some embodiments, the movable connection between the material feeding tray 200 and the base 110 is achieved by a sliding groove or a sliding rail, so as to increase the smoothness of the forward and backward movement of the material feeding tray 200 and reduce the up-and-down jolt of the surface of the material feeding tray 200. In some embodiments, the movable connection between the material feeding tray 200 and the base 110 is achieved by a sliding screw rod, so that the frontward and backward displacement of the material feeding tray 200 can be accurately controlled. It can be understood that the present application is not specifically limited to the specific manner in which the material feeding tray 200 is movably connected with the base 110.

There may be one or more material feeding trays 200. For example, a plurality of material feeding trays are arranged side by side along the third direction D3. Each material feeding tray 200 may be provided with a plurality of material feeding positions 210, where workpieces 20 carried by at least two of the material feeding positions 210 have different specifications, so that the workpieces with various specifications may be fed with materials synchronously.

The workpieces 20 may be of any type, such as an angle steel. The specification of the workpiece 20 refers to the structural form and the dimension of the workpiece. The clamping grooves of the fixing seats of the material feeding positions 210 corresponding to the workpieces 20 with different specifications have different structures. In some embodiments, the number of the material feeding positions 210 may be the same as that of the specifications of the workpieces 20.

The fool-proof mechanism 300 is located at an end of the material feeding tray 200 along the first direction D1. In some embodiments, both ends of the material feeding position 210 along the first direction D1 refer to a material feeding end and a material discharging end, respectively. The material feeding tray 200 may move towards the material feeding end along the first direction D1, such that the workpiece 20 is placed on the fixing seat corresponding to the material feeding position 210. After the fixing seats of the material feeding positions 210 are fully filled with workpieces, the material feeding tray 200 is moved above the base 110 and is moved out of the material discharging end. The fool-proof mechanism 300 may be located at an end where the material feeding end is located, such that fool-proof detection may be performed on the workpiece at the material feeding position 210 in the process that the material feeding tray 200 is moved in and out, and the specification of the workpiece entering the corresponding material feeding position 210 is limited. In other embodiments, the material feeding end and the material discharging end of the material feeding position 210 are both located at the same end along the first direction D1, and the fool-proof mechanism 300 is also located at this end at the same time, such that the specification or the geometric dimension of the workpiece 20 carried by the material feeding position 210 may be limited, a workpiece with an incorrect specification may be found in time, and the workpieces with different specifications may be fed with materials correctly. The fool-proof mechanism 300 may be arranged on the frame 100 in a fixed connection manner, or may be arranged in a fixed connection with other structures, as long as the specification of the workpiece at the material feeding position 210 can be limited.

Therefore, by arrangement of the fool-proof mechanism 300, the specification of the workpiece at each material feeding position 210 may be limited, and the workpiece which is not in line with the preset specification of the material feeding position 210 is identified, so that the correct workpiece may be fed with materials via the material feeding position 210 corresponding to the workpiece, and disordered material feeding when a plurality of workpieces are fed with materials simultaneously may be avoided to a certain extent, thereby improving the accuracy and the material feeding efficiency when the workpieces with a plurality of specifications are fed with materials simultaneously.

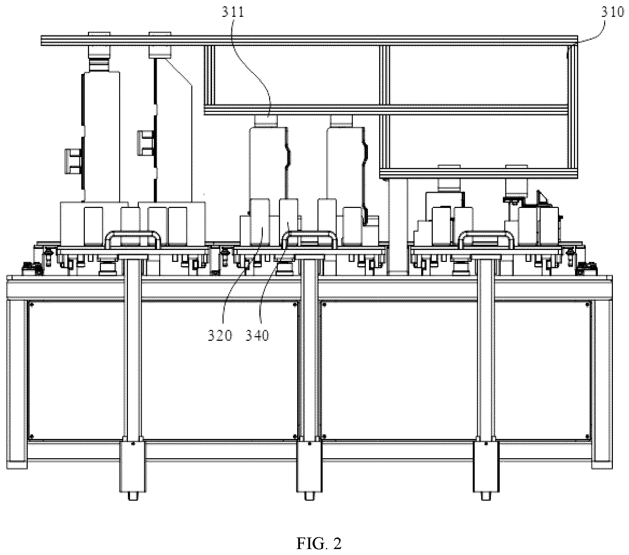

Referring to FIG. 2, FIG. 2 is a front view of a material feeding apparatus according to some embodiments of the present application. The fool-proof mechanism 300 includes a plurality of dimension limiting members 310 arranged correspondingly to the plurality of material feeding positions 210, the dimension limiting members 310 being configured to limit dimensions of the workpieces 20 at the material feeding positions 210 along a second direction D2 perpendicular to the first direction D1.

In the production or assembly process of batteries or electric apparatuses, the use of a plurality of workpieces with different dimensions may be involved. In order to distinguish the workpieces with different dimensions and achieve correct material feeding, a dimension limit may be set correspondingly at the material feeding position, such that the dimension of the workpiece at the material feeding position may be limited.

In some embodiments, the material feeding position 210 may drive the workpiece 20 located thereon to move along the first direction D1. The dimension limiting unit is arranged along the second direction perpendicular to the first direction D1 and is configured to limit a projection dimension of the workpiece 20 along a plane perpendicular to the first direction D1. For example, if the second direction D3 is a vertical direction, the dimension limiting member 310 may limit a height of the workpiece 20, or if the second direction D2 is a horizontal direction, the dimension limiting member 310 may limit a width of the workpiece 20. It can be understood that the second direction D2 may also be any direction perpendicular to the first direction D1, and may be set specifically according to the shape feature of the workpiece 20.

The dimension limiting member 310 may be a mechanical limiting structure or a limiting sensor, which may be selected or combined as required.

In some embodiments, the number of the dimension limiting members 310 may also be the same as the number of the material feeding positions 210, and may be arranged in one-to-one correspondence with the material feeding positions 210, so that the dimensions of the workpieces at the material feeding positions 210 may be separately limited.

Therefore, the dimension limiting members 310 are arranged, such that the workpieces may be distinguished and screened according to the dimension difference of different workpieces along the second direction, thereby improving the uniformity and the accuracy of the material feeding dimensions of the workpieces, and making the reliability higher.

Referring to FIG. 2, FIG. 2 is a front view of a material feeding apparatus according to some embodiments of the present application. The dimension limiting member 310 may include a limiting block 311, and the limiting block 311 is located directly above a movement path of the workpiece 20 at the corresponding material feeding position 210.

The workpiece 20 carried by the material feeding position 210 moves along the first direction D1 with respect to the base 110, and the limiting block 311 is arranged directly above the movement path of the workpiece 20 along the vertical second direction D2, so as to limit the height of the workpiece 20 along the second direction D2. It can be understood that when a workpiece with a height exceeding the lowest point of the limiting block 311 appears, and the material feeding position 210 drives the workpiece to move, the ultrahigh workpiece may contact or even collide with the limiting block 311, so as to remind a worker of incorrect material feeding.

The limiting block 311 is arranged above the movement path of the material feeding position 210 of the material feeding tray 200, for example, fixed on a cross beam of the frame 100 at the top of the material feeding tray, so as to limit the height of the workpiece entering the material feeding position 210. In some embodiments, the limiting block 311 and the frame 100 may be movably connected with each other, which is beneficial to adjusting the position of the limiting block 311 along the second direction D2.

In some embodiments, for the situation that the workpiece 20 may have different heights at different positions, a plurality of limiting blocks 311 may be arranged correspondingly at one material feeding position 210. The number of the limiting blocks 311 may be specifically determined according to the vertical shape of the workpiece 20. For example, the limiting blocks 311 may be arranged at different heights of the workpiece 20, and may also be arranged along the horizontal third direction D3 on the workpiece 20, so as to further enhance the limiting effect.

Therefore, the heights of different workpieces are limited by the limiting blocks 311, the structure is simple, and the limiting effect is reliable, which is beneficial to the simplification of the structure of the dimension limiting member 310 to a certain extent.

According to some embodiments of the present application, the limiting block 311 is fixedly connected with the frame 100 in a manner of being adjustable along the height direction.

In some embodiments, the limiting block 311 and the frame 100 may be connected with each other by a fastener, and the limiting block 311 is provided with a plurality of installing holes formed along the vertical direction, such that the height of the limiting block 311 may be adjusted according to the height requirement. The limiting block 311 may be further provided with an installing groove extending along the vertical direction, such that the fastener may slide in the installing groove to adjust the position of the limiting block 311.

Therefore, the manner in which the limiting block 311 is connected with the frame 100 is set to be adjustable along the height direction, such that the corresponding adjustment may be carried out more conveniently according to the dimension of the workpiece at the corresponding material feeding position 210, the workpiece is fed with materials more flexibly, and the application range is wider.

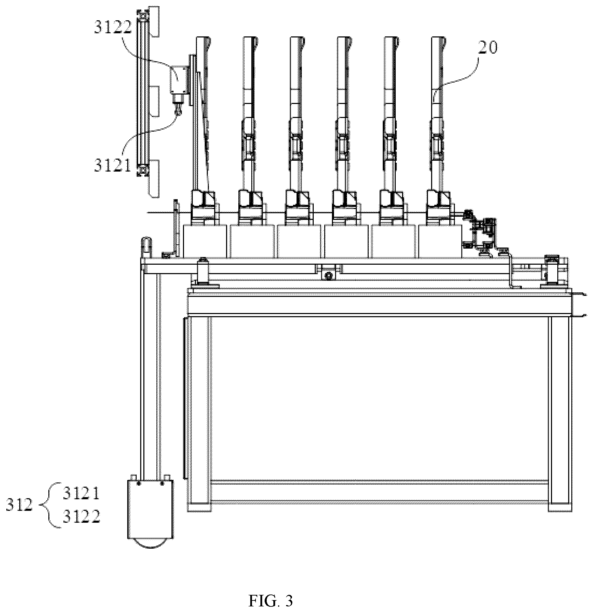

Referring to FIG. 3, FIG. 3 is a side view of a material feeding apparatus according to some embodiments of the present application. The dimension limiting member 310 includes a touch sensor 312, and the touch sensor 312 includes a contact component 3121 and a contact switch 3122, where the contact component 3121 is movably connected with the frame 100 and is rotatable around a connection point with the frame 100 under the action of an external force, and the contact switch 3122 is configured to transmit a touch signal at a position of the contact component 3121 with respect to the connection point.

The workpieces to be fed with materials may involve a plurality of workpieces having substantially similar dimensions, which requires that the dimension limiting member 310 is high in limiting precision. In this embodiment, when the height of the incorrect workpiece entering one of the material feeding positions 210 is only slightly larger than that of the correct workpiece, the incorrect workpiece is brought into contact with the contact component 3121 by the material feeding tray 200 and rotates by a certain angle, so as to trigger the contact switch 3122 to generate a touch signal, which may indicate that the incorrect workpiece appears at the material feeding position 210. The material feeding apparatus 10 may process the incorrect workpiece in response to the touch signal, so that the incorrect workpieces with a similar height are prevented from being pushed in violently.

In some embodiments, the touch sensor 312 is fixedly connected with the frame 100 in a manner of being adjustable along the second direction D2, so that the material feeding apparatus 10 may be adapted to more workpieces with different dimension specifications to a certain extent.

Therefore, the dimension limiting member 310 is selected as the touch sensor 312, and different workpieces are distinguished and screened according to the heights of the different workpieces. The touch sensor 312 triggers an electrical signal based on a dimension feature of the incorrect workpiece, so as to limit the dimension specification of the workpiece, with high detection precision and detection efficiency, and the state whether incorrect material feeding occurs may be fed back to the material feeding apparatus 10 in time, which is beneficial to the electrification of the material feeding apparatus 10.

According to some embodiments of the present application, the dimension limiting member 310 further includes a limiting block 311, the limiting block 311 and the touch sensor 312 are located directly above a movement path of the same material feeding position 210 with respect to the base 110, and the lowest point of the limiting block 311 is lower than the lowest point of the touch sensor 312.

The limiting block 311 is a mechanical limiting structure, and the limited height is greatly influenced by the dimension and the position of the limiting block, and therefore, the limited precision is limited. Moreover, when the workpiece 20 is of a slender structure, an incorrect workpiece may bypass the limitation of the limiting block 311 through certain bending deformation, such that the entry of incorrect workpieces cannot be found in time only by the limiting block 311.

In some embodiments, the touch sensor 312 and the limiting block 311 are both located on the movement path of the material feeding position 210 at the same time and are located at the material feeding end of the material feeding position 210. Therefore, the limiting block 311 may be used as the first primary screening, and the touch sensor 312 may be used as the second screening with higher precision.

In some embodiments, the lowest point of the contact component 3121 may be slightly higher than the lowest point of the limiting block 311, for example, by 2 millimeters (mm) to 5 millimeters (mm), which may form double limiting, and avoid false negatives of an ultrahigh incorrect workpiece. In some embodiments, the lowest point of the contact component 3121 may be lower than the lowest point of the limiting block 311, such that an incorrect workpiece with a height less than the limiting height of the limiting block 311 can be identified by the touch sensor 312.

Therefore, the limiting block 311 and the touch sensor 312 are arranged simultaneously, such that the accuracy of fool-proof detection of the dimension limiting member 310 may be improved, and the material feeding apparatus 10 may be prevented from incorrect material discharging to a certain extent, which further improves the reliability of the material feeding apparatus 10.

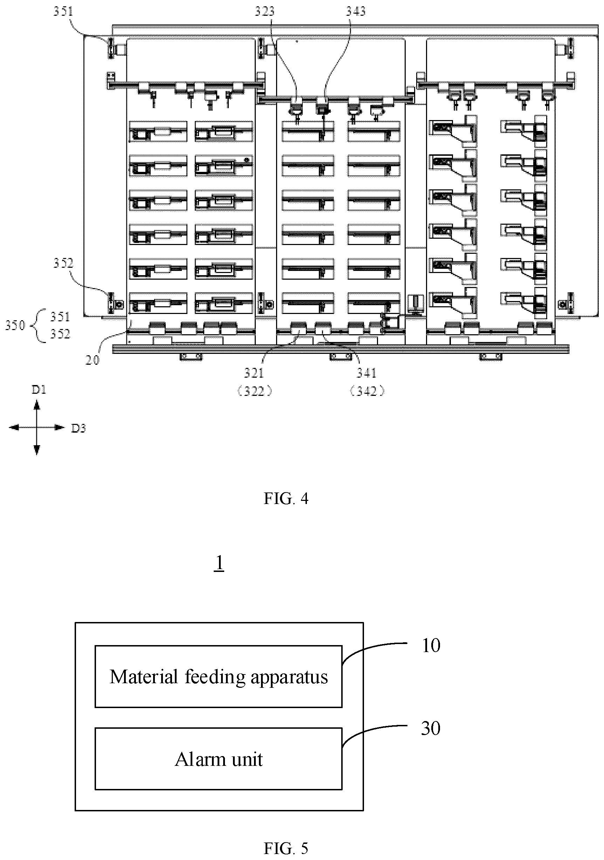

Referring to FIG. 4, FIG. 4 is a top view of a material feeding apparatus according to some embodiments of the present application. The fool-proof mechanism 300 further includes a feature detecting unit 320. The feature detecting unit 320 is located at an end part of the material feeding position 210 along the first direction D1. The feature detecting unit 320 is configured to detect whether shape features of the workpieces located at the material feeding position 210 are the same.

In some embodiments, the feature detecting unit 320 may be any feature detection or feature identification apparatus. For example, it is detected or identified whether one or more features of all the workpieces at the same material feeding position are the same through visual detection, ray detection or other detection methods to judge whether there is an incorrect workpiece.

In some embodiments, the feature detecting unit 320 includes a machine vision detection system. The machine vision detection system collects images along the first direction D1, and judges whether there are prominent features obviously exceeding the correct part contour in real time according to the collected images. If the features obviously exceeding the correct part contour are detected, it is possible to judge that there is an incorrect workpiece with a specification different from that of the correct workpiece at the material feeding position 210, so that a signal may be further transmitted to remind an operator to remove the incorrect workpiece.

The feature detecting unit 320 may be located at the material feeding end or the material discharging end of the material feeding position 210 along the first direction D1, or the feature detecting units may be arranged at both ends of the material feeding position 210 along the first direction D1. The feature detecting unit 320 may be fixedly connected with the material feeding tray 200, such that the material feeding tray 200 does not interfere with the material shortage detecting unit 340 when moving. The number of the feature detecting units 320 may be the same as the number of the material feeding positions 210, or a plurality of feature detecting units 320 may be arranged correspondingly to one material feeding position 210. The respective feature detecting units 320 are configured to detect features of different positions.

The feature detecting units 320 are provided, so as to identify the shapes of the workpieces at the plurality of material feeding positions 210, detect from another dimension whether the workpiece at the material feeding position is in line with the specification requirement, find abnormal incorrect workpieces in time, and further improve the reliability of the material feeding apparatus 10.

According to some embodiments of the present application, the feature detecting unit 320 includes a first transmitting part 321 and a first receiving part 322. The first transmitting part 321 is configured to transmit a first detection signal emitted to a periphery of a preset edge position of a workpiece at the material feeding position 210, and the first receiving part 322 is configured to receive the first detection signal.

The feature detecting unit 320 may be a ray detection apparatus. The first transmitting part 321 may be located at an end of the material feeding position 210 along the first direction D1. The first receiving part 322 is located at the other end of the material feeding along the first direction D1. The first transmitting part 321 transmits a first detection signal emitted to the periphery of the preset edge position of the workpiece at the material feeding position 210, and the first receiving part 322 can smoothly receive the first detection signal if there is no incorrect member with a different shape at the preset edge position. On the contrary, if there is an incorrect member with a different shape at the preset edge position, the first detection signal is blocked from entering the first receiving part 322. Therefore, it is possible to judge whether there is an incorrect member according to whether the first receiving part 322 receives the first detection signal.

The preset edge position may be the position where the edges of workpieces with different specifications and special shapes or structures are located. The transmitting direction of the first detection signal is located within the range of the peripheral area of the preset edge position of the workpiece, which may be specifically determined and debugged according to the shape feature and the position relation of the workpiece.

In some embodiments, the first detection signal may be a laser. The first transmitting part 321 and the first receiving part 322 may be a laser generating part and a laser receiving part, respectively, so as to further improve the feature detection precision.

Therefore, by selecting the form of the feature detecting unit 320 as the form of the signal transmitting part and the signal receiving part, the feature of the workpiece may be detected in real time, and meanwhile, the accuracy and the reliability of detection are high, and thus false positives or false negatives that may occur during feature detection may be reduced to a certain extent.

According to some embodiments of the present application, the feature detecting unit 320 includes a first reflecting part 323 configured to reflect the first detection signal. The first transmitting part 321 and the first receiving part 322 are both located at an end of the material feeding position 210 along the first direction D1. The first reflecting part 323 is located at the other end of the material feeding position 210 along the first direction D1.

Along the first direction D1, the first transmitting part 321 and the first receiving part 322 may be located at an end of the material feeding position 210 along the first direction D1. The first reflecting part 323 may be located at the other end of the material feeding position 210 along the first direction D1. That is, all the workpieces at the material feeding position 210 are located among the first transmitting part 321, the first receiving part 322 and the first reflecting part 323 along the first direction D1. During detection, the first transmitting part 321 transmits a first detection signal. If the structural dimensions of the workpieces are the same, the first detection signal can directly reach the first reflecting part 323. The first reflecting part 323 reflects the first detection signal. When the first receiving part 322 smoothly receives the first detection signal reflected by the first reflecting part 323, it indicates that there is no abnormal structure at the material feeding position 210 that is capable of blocking the first detection signal, so as to judge that the shape features of all the workpieces at the material feeding position 210 are the same at this position. The incorrect workpiece has an abnormal structure blocking the first detection signal because the incorrect workpiece is different from other workpieces, which may cause the first detection signal to be attenuated or block the first detection signal from reaching the first reflecting part, and may even directly reflect the first detection signal to the first receiving part 322 in advance. In this way, it is possible to judge whether there is an incorrect workpiece according to the receiving time or the signal strength of the returned first detection signal received by the first receiving part 322 or even the failure to receive the returned first detection signal.

The first reflecting part 323, the first transmitting part 321, and the first receiving part 322 may be all fixedly connected with the material feeding tray 200.

Therefore, the first reflecting part 323 is further arranged, such that the shape features of all the workpieces at the material feeding position 210 may be efficiently judged to be the same, and thus the efficiency and the accuracy of feature detection are improved.

According to some embodiments of the present application, the fool-proof mechanism 300 further includes a fixing seat 330, and the fixing seat 330 is provided with a clamping groove 331 configured to be clamped with a workpiece; any of the material feeding positions 210 is provided with at least one fixing seat 330, and dimensions of the clamping grooves 331 of the fixing seats 330 located at the same material feeding position 210 are the same.

The fixing seat 330 is arranged at the material feeding position 210 to fix the workpiece. The fixing seat 330 is provided with a clamping groove 331, such that the workpiece may be clamped to the fixing seat 330. The structure of the clamping groove 331 is set according to the structural features of the workpieces at the position. The dimensions of the clamping grooves 331 of the fixing seats 330 located at the same material feeding position 210 are the same. The dimensions of the clamping grooves 331 of the fixing seats 330 located at different material feeding positions 210 may be different from each other, such that an incorrect workpiece cannot be fixed in the clamping groove 331 which does not correspond to the incorrect workpiece.

Therefore, an interface form in which the fixing seat 330 is clamped with the workpiece is set differentially, such that the incorrect workpiece may be prevented from being placed at the incorrect material feeding position 210 to a certain extent, and thus the reliability of the material feeding apparatus 10 is further improved.

According to some embodiments of the present application, the material feeding apparatus 10 further includes a material shortage detecting unit 340. The material shortage detecting unit 340 is located at an end part of the material feeding position 210 along the first direction D1. The material shortage detecting unit 340 is configured to detect whether the material feeding position 210 is short of materials.

The material shortage detecting unit 340 may detect whether the workpiece at the material feeding position 210 is short of materials through visual detection, ray detection, or other detection methods. The material shortage detecting unit 340 may be located at either end or both ends of the material feeding position 210 along the first direction D1. The material shortage detecting unit 340 may be fixedly connected with the material feeding tray 200, such that the material feeding tray 200 does not interfere with the material shortage detecting unit 340 when moving. The number of the material shortage detecting units 340 may be the same as the number of the material feeding positions 210 and be arranged in one-to-one correspondence.

In some embodiments, the material shortage detecting unit 340 may include a machine vision detection system. The machine vision detection system collects images along the first direction D1, and judges whether there is a material shortage in real time according to the collected images. A missing workpiece is caused to be supplemented if a material shortage is detected;

Therefore, the material shortage detecting unit 340 is arranged, such that the condition of a material shortage of the workpiece may be found in time, and the missing workpiece may be supplemented in time, which is beneficial to keeping the continuous operation of a production line and improving the production efficiency.

According to some embodiments of the present application, the material shortage detecting unit 340 includes a second transmitting part 341 and a second receiving part 342, the second transmitting part 341 being configured to transmit a second detection signal emitted to a position of the workpiece at the material feeding position 210, and the second receiving part 342 being configured to receive the second detection signal.

The material shortage detecting unit 340 may be a detection apparatus of the same type as the feature detecting unit 320 or a detection apparatus of a different type from the feature detecting unit. The second transmitting part 341 and the second receiving part 342 may be arranged at both ends of the material feeding position 210 along the first direction D1, respectively, and may be fixedly connected with the base 110.

In some embodiments, the second detection signal transmitted by the second transmitting part 341 may be blocked by the workpiece at the material feeding position 210, such that the second receiving part 342 cannot receive the second detection signal, or receives the attenuated second detection signal. When the material feeding position 210 is short of materials, it means that there is no workpiece, and at this time, the second receiving part 342 can directly receive the second detection signal. Therefore, it is possible to judge whether there is a material shortage according to whether the second receiving part 342 receives the second detection signal or the signal strength of the received second detection signal.

Therefore, by selecting the form of the material shortage detecting unit 340 as the form of the signal transmitting part and the signal receiving part, the feature of the workpiece may be detected in real time, and meanwhile, the accuracy and the reliability of detection are high, and thus the possibility of false positives or false negatives during material shortage detection may be reduced to a certain extent.

According to some embodiments of the present application, the material shortage detecting unit 340 further includes a reflection part configured to reflect the second detection signal; where the second transmitting part 341 and the second receiving part 342 are both located at an end of the material feeding position 210 along the first direction D1, and the second reflecting part 343 is located at the other end of the material feeding position 210 along the first direction D1.

Along the first direction D1, the second transmitting part 341 and the second receiving part 342 may be located at an end of the material feeding position 210 along the first direction D1, and the second reflecting part 343 may be located at the other end of the material feeding position 210 along the first direction D1. That is, all the workpieces at the material feeding position 210 are located among the second transmitting part 341, the second receiving part 342 and the second reflecting part 343 along the first direction D1. When the second receiving part 342 receives the second detection signal reflected by the second reflecting part 343, it indicates that no prominent features capable of blocking the second detection signal from advancing are provided at the material feeding position 210, so that the number of workpieces at the material feeding position 210 may be judged to be zero.

Therefore, when the second receiving part 342 receives the second detection signal reflected by the second reflecting part 343, it indicates that no workpiece capable of blocking the second detection signal is provided at the material feeding position 210, so that the number of workpieces at the material feeding position 210 may be efficiently judged to be zero, and thus the efficiency of material shortage detection is improved.

According to some embodiments of the present application, the material feeding tray 200 includes a pushing state where the material feeding tray is located directly above the base 110 and a pulling state where the material feeding tray moves along the first direction D1 and is at least partially offset from the base 110; and the material feeding apparatus 10 further includes a position sensor 350, the position sensor 350 being fixedly connected to the base 110 and being configured to detect the state of the material feeding tray 200.

When the material feeding tray 200 is in the pushing state where the material feeding tray is located directly above the base 110, the material feeding tray 200 and the workpiece carried thereby are aligned with the fool-proof mechanism 300 at this time. It is possible to judge whether the workpiece is fed with materials incorrectly by relative movement between the material feeding tray 200 and the fool-proof mechanism 300 along the first direction D1. When the material feeding tray 200 is in the pulling state where the material feeding tray is at least partially offset from the base 110, the space around the material feeding tray is wide, which is beneficial to adding workpieces to the material feeding tray 200.

The position sensor 350 may be of any sensor type, such as through visual detection, ray detection, electrical switch detection or the like, as long as the position of the material feeding tray 200 can be detected or identified.

The position sensor 350 may detect the position of the material feeding tray 200, such that the material feeding apparatus 10 can acquire the position state of the material feeding tray 200 to enable the material feeding apparatus 10 to carry out a corresponding operation. For example, when the material feeding tray 200 is in a pulling state, the material feeding apparatus 10 may limit the relative movement between the material feeding tray 200 and the fool-proof mechanism 300 along the first direction D1, so as to add workpieces to the material feeding tray 200.

Therefore, when the material feeding tray 200 is in a pulling state, the space around the material feeding tray 200 is wide, which is beneficial to adding workpieces to the material feeding tray 200. Meanwhile, the material feeding apparatus is provided with a position sensor 350 configured to detect the state of the material feeding tray 200, such that the material feeding apparatus can acquire the position state of the material feeding tray 200, and the material feeding apparatus 10 can be matched with other processes, which is beneficial to achieving automatic material feeding in the whole flow.

According to some embodiments of the present application, the position sensor 350 includes a first proximity switch 351 and a second proximity switch 352, the first proximity switch 351 and the second proximity switch 352 being located at both ends of the base 110 along the first direction D1, respectively.

The position sensor 350 may be a proximity switch. The proximity switch is a position switch that may be operated without mechanical direct contact with a moving component. When an object approaches the sensing surface of the switch to an action distance, the switch may be actuated without mechanical contact or any pressure applied, thereby driving a DC-powered electrical device or providing a control instruction to a computer apparatus.

The first proximity switch 351 and the second proximity switch 352 are arranged at both ends of the base 110 along the first direction D1, respectively, such that the position of the material feeding tray 200 may be detected. In some embodiments, when the material feeding tray 200 is in a pulling state, only the first proximity switch 351 can generate a signal, while the second proximity switch 352 does not generate a signal because the second proximity switch is completely offset from the material feeding tray 200; when the material feeding tray 200 is in a pushing state, only the second proximity switch 352 may generate a signal, while the first proximity switch 351 does not generate a signal, or the first proximity switch 351 and the second proximity switch 352 generate signals at the same time.

Therefore, the form of the position sensor 350 is selected as two proximity switches, and the proximity switches can judge the position state of the material feeding tray 200 without contacting the material feeding tray 200, such that the proximity switches are not subject to wear, offering high stability and reliability, enabling long-term stable operation, and reducing the frequency of maintenance and replacement.

Referring to FIG. 5, FIG. 5 is a structural block diagram of a battery production line according to some embodiments of the present application. The battery production line 1 includes the material feeding apparatus 10 according to the above embodiments of the present application and an alarm unit 30 in signal connection with the material feeding apparatus 10. The alarm unit 30 is configured to transmit an alarm signal in response to the situation that the material feeding apparatus 10 is in an abnormal state; the abnormal state includes one or more of an abnormal position of the material feeding tray, an incorrect material feeding indication of the fool-proof mechanism, and a material shortage of the material feeding position.

In some embodiments, the alarm unit 30 may be in signal connection according to the fool-proof mechanism 300, such that the fool-proof mechanism 300, when finding incorrect material feeding, sends a signal to the alarm unit 30. The alarm unit 30 sends an alarm or a prompt message to remind the operator to make adjustments.

In some embodiments, the alarm unit 30 may further be in signal connection with the material shortage detecting unit 340. The material shortage detecting unit 340, when detecting that the material feeding position is short of materials, sends a signal to the alarm unit 30, and the alarm unit 30 sends an alarm or a prompt message.

In some embodiments, the alarm unit 30 may also be in signal connection with the position sensor 350. The position sensor 350, when detecting that the material feeding tray 200 is in a state other than the preset position state, judges that the material feeding tray is in an abnormal position, and sends a signal to the alarm unit 30, and the alarm unit 30 sends an alarm or a prompt message. In some embodiments, the alarm unit 30 may also be in signal connection with one or more of the touch sensor 312, the feature detecting unit 320, the material shortage detecting unit 340, and the position sensor 350 included in the material feeding apparatus 10. The alarm unit 30 may receive signals transmitted from different sensors and accordingly send different alarms or prompt messages.

In some embodiments, the alarm unit 30 may be in the form of an audible and visual alarm, or may send a prompt message to a corresponding computer system or control system. It can be understood that the present application is not limited to the specific form of the alarm unit 30.

In some embodiments, the battery production line 1 may further include a supplying unit configured to supply workpieces to the material feeding trays 200 of the material feeding apparatus 10, and a transferring unit configured to move the workpieces out of the material feeding apparatus 10. The supplying unit and the transferring unit may be an automated device of any type, such as a robot or a manipulator. The supplying unit and the transferring unit may be controlled together with the material feeding apparatus 10 via the same control system, or may be independently controlled execution units.

Therefore, by arranging the material feeding apparatus 10 provided with the fool-proof mechanism, the incorrect material feeding can be found in time, and the operators can know the abnormal condition of the material feeding apparatus 10 in time in combination with the alarm unit 30, which is beneficial to keeping the continuous operation of a production line and improving the production efficiency.

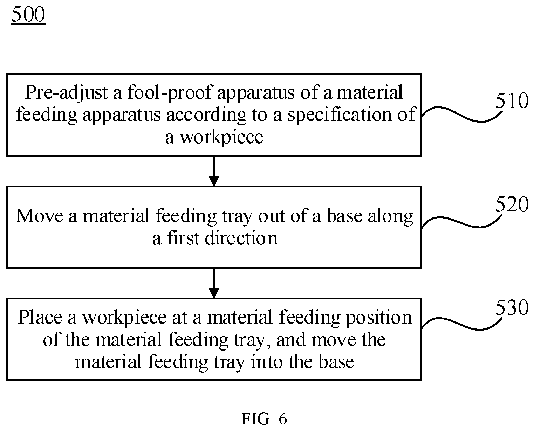

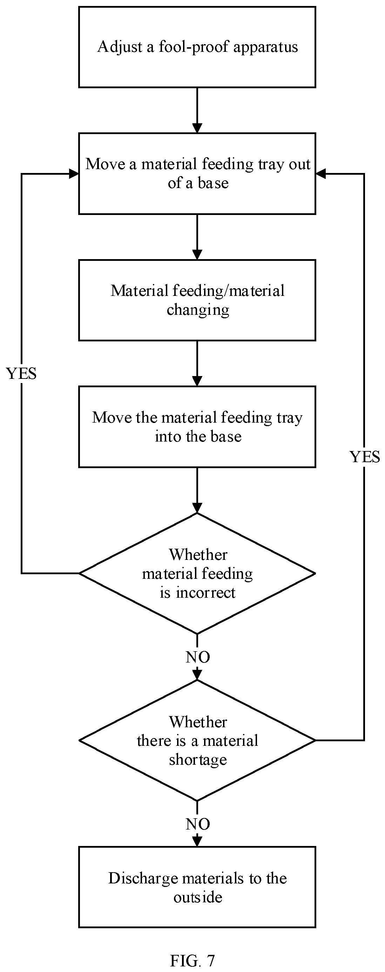

Referring to FIG. 6 and FIG. 7, FIG. 6 is a schematic diagram of a material feeding method according to some embodiments of the present application, and FIG. 7 is a schematic diagram of a material feeding flow according to some embodiments of the present application. The material feeding method 500 includes the following steps.

In step 510, the fool-proof mechanism 300 of the material feeding apparatus 10 is preadjusted according to the specification of the workpiece, where the material feeding apparatus 10 is the material feeding apparatus 10 according to the above embodiments of the present application.

The fool-proof mechanism 300 may include the dimension limiting member 310 described in the above embodiments, such as the limiting block 311 or the touch sensor 312 or a combination thereof. Pre-adjustment refers to adjusting the position of the limiting block 311 and/or the touch sensor 312 along the vertical second direction D2 and the horizontal third direction D3 according to the specification of the workpiece. The fool-proof mechanism 300 may further include a feature detecting unit 320, and the specific position of the feature detecting unit 320 is adjusted according to the shape or the feature of the workpiece.

In step 520, the material feeding tray 200 is moved out of the base 110 along the first direction D1.

In step 530, the workpiece is placed at the material feeding position 210 of the material feeding tray 200, and the material feeding tray 200 is moved into the base 110.

After the material feeding tray 200 is moved out of the base 110, the space around the material feeding tray is wide, so that an operator and/or a robot can place a workpiece at the material feeding position 210, and then move the material feeding tray 200 into the base 110. After the material feeding tray 200 is moved into the base 110, the material feeding apparatus 10 may also determine that the material feeding tray 200 has been moved into the base 110 through the position sensor 350, and then judge whether incorrect material feeding occurs through the fool-proof mechanism 300.

Therefore, workpieces with different specifications may be provided to the material feeding apparatus 10 through the above steps, and it is possible to judge whether incorrect material feeding occurs through the fool-proof mechanism 300, so that the workpieces with various specifications are fed with materials synchronously, and the accuracy and the efficiency of material feeding are improved.

According to some embodiments of the present application, the material feeding method 500 further includes: in response to the incorrect material feeding indication of the fool-proof mechanism 300 of the material feeding apparatus 10, re-moving the material feeding tray 200 out of the base 110 along the first direction D1, adjusting an incorrect workpiece on the material feeding tray 200, and re-moving the material feeding tray 200 into the base 110.

Adjusting the incorrect workpiece includes removing the incorrect workpiece directly or replacing the incorrect workpiece with a correct workpiece until the fool-proof mechanism 300 no longer has an incorrect material feeding indication.

Therefore, incorrect material feeding may be detected efficiently and adjusted in a targeted manner, and the risk that incorrect workpieces flow into the subsequent production or assembly process may be reduced effectively.

According to some embodiments of the present application, the material feeding method 500 further includes:
in response to a correct material feeding indication of the fool-proof mechanism 300 of the material feeding apparatus 10, transferring the workpiece in the material feeding apparatus 10 to a preset position.

The material feeding method 500 further includes: detecting whether the material feeding position 210 is short of materials; and
in response to the material shortage of the material feeding position 210, supplementing a workpiece with a corresponding specification to the material feeding position 210.

Transferring the workpieces in the material feeding apparatus 10 to the preset position may be achieved by a manipulator or an autonomous mobile robot. Specifically, corresponding assembly operations may be performed by sequentially grabbing one or more workpieces and transferring the workpieces to the preset position.

Therefore, whether material feeding is correct and whether the material feeding position 210 is short of material can be detected efficiently, so as to supplement the workpieces in time, which is beneficial to further improving the material feeding efficiency.

The technical solutions of the present application are further illustrated by means of some specific embodiments.

As shown in FIG. 1 to FIG. 4, the material feeding apparatus 10 includes a frame 100, material feeding trays 200, and a fool-proof mechanism 300.

The frame 100 is configured to provide a structural support for the entire material feeding apparatus 10, and specifically includes a base 110. The surface of the base 110 is generally rectangular to provide a generally flat installing surface for the material feeding tray 200.

The material feeding tray 200 is arranged on the surface of the base 110 and is movably connected with the base 110. The material feeding tray 200 may move back and forth along the first direction D1 with respect to the base 110, such that the material feeding apparatus 10 may push out the workpiece 20 to be fed with materials along the first direction D1, thereby completing the material feeding process of the workpiece 20. As shown in FIG. 4, the material feeding apparatus 10 includes 3 material feeding trays 200. Each material feeding tray 200 is provided with a plurality of material feeding positions 210 along the third direction D3, and each material feeding position 210 is provided with a plurality of fixing seats 330 along the first direction D1 direction, where the plurality of fixing seats 330 along the first direction D1 carry workpieces with the same specification, and the plurality of material feeding positions 210 along the third direction D3 carry workpieces with different specifications.

The fool-proof mechanism 300 is arranged on the frame 100 in a fixed connection manner, and the specification or the geometric dimension of the workpiece 20 carried by each material feeding position 210 may be limited, so as to satisfy the situation that the workpiece limited by the fool-proof mechanism 300 is fed with materials correctly. The fool-proof mechanism 300 includes a limiting block 311, a touch sensor 312, and a fixing seat 330. The touch sensor 312 includes a contact component 3121 and a contact switch 3122. The limiting block 311 and the touch sensor 312 are located above the same material feeding position 210, and the lowest point of the contact component 3121 is not lower than the lowest point of the limiting block 311. The fixing seat 330 is provided with a clamping groove 331, such that the workpiece may be clamped to the fixing seat 330. Moreover, different material feeding positions 210 is provided with clamping grooves 331 with different structures, so as to prevent the incorrect workpiece from being fixed to a non-corresponding fixing seat 330.

The fool-proof mechanism 300 further includes a feature detecting unit 320 and a material shortage detecting unit 340.

The feature detecting unit 320 includes a first transmitting part 321, a first receiving part 322, and a first reflecting part 323. Along the first direction D1, the first transmitting part 321 and the first receiving part 322 are located at an end of the material feeding position 210 along the first direction D1, and the first reflecting part 323 is located at the other end of the material feeding position 210 along the first direction D1. Along the third direction D3, the first transmitting part 321, the first receiving part 322 and the first reflecting part 323 may have the same position, all of which are located around the preset edge position of the workpiece at the material feeding position 210, so that the first detection signal advances along the preset edge of the workpiece. When the first receiving part 322 receives the first detection signal reflected by the first reflecting part 323, it indicates that no prominent features capable of blocking the first detection signal are provided at the material feeding position 210, so as to judge that the shape features of all the workpieces at the material feeding position 210 are the same at this position.

The material shortage detecting unit 340 includes a second transmitting part 341, a second receiving part 342, and a second reflecting part 343. Along the first direction D1, the second transmitting part 341 and the second receiving part 342 are located at an end along the first direction D1, and the second reflecting part 343 is located at the other end along the first direction D1. When the second receiving part 342 receives the second detection signal reflected by the second reflecting part 343, it indicates that no prominent features capable of blocking the second detection signal from advancing are provided at the material feeding position 210, so that the number of workpieces at the material feeding position 210 may be judged to be zero.

The material feeding apparatus 10 includes a position sensor 350. The position sensor 350 includes a first proximity switch 351 and a second proximity switch, the first proximity switch 351 and the second proximity switch 352 being located at both ends of the base 110 along the first direction D1, respectively. By arrangement of the two proximity switches described above, the material feeding apparatus can acquire the position state of the material feeding tray 200 to enable the material feeding apparatus to carry out a corresponding operation.

As shown in FIG. 5, the battery production line 1 includes the material feeding apparatus and the alarm unit 30 as described above. In response to signals transmitted by the touch sensor 312, the feature detecting unit 320, the material shortage detecting unit 340, and/or the position sensor 350, the alarm unit 30 may correspondingly transmit different signals to remind an operator to take appropriate actions.

As shown in FIG. 6 and FIG. 7, the material feeding method 500 includes the following steps.

In step 510, the fool-proof mechanism 300 of the material feeding apparatus is adjusted according to the specification of the workpiece, where the material feeding apparatus is the material feeding apparatus as described above.

In step 520, the material feeding tray 200 is moved out of the base 110 along the first direction D1.

In step 530, the workpiece is placed at the material feeding position 210 of the material feeding tray 200, and the material feeding tray 200 is moved into the base 110.

The material feeding method 500 further includes:
in response to the incorrect material feeding indication of the fool-proof mechanism 300 of the material feeding apparatus, re-moving the material feeding tray 200 out of the base 110 along the first direction D1, adjusting an incorrect workpiece on the material feeding tray 200, and re-moving the material feeding tray 200 into the base 110; and
in response to a correct material feeding indication of the fool-proof mechanism 300 of the material feeding apparatus, controlling a material feeding robot to transfer a workpiece in the material feeding apparatus to a preset position.

Through the judgment whether material feeding is correct, different subsequent operations are executed, which is beneficial to further improving the production efficiency.

Finally, it should be noted that the above embodiments are only used to illustrate the technical solutions of the present application, but not to limit them. Although the present application has been described in detail with reference to the foregoing embodiments, those of ordinary skill in the art should understand that they can still modify the technical solutions recorded in the foregoing embodiments or make equivalent substitutions for some or all of the technical features, however, these modifications or substitutions do not make the essence of the corresponding technical solutions deviate from the scope of the technical solutions in the embodiments of the present application, and these modifications or substitutions shall all fall within the scope of claims and specification of the present application. **In** particular, the technical features mentioned in the embodiments may be combined in any manner as long as there are no structural conflicts. The present application is not limited to the specific embodiments disclosed herein, but encompasses all technical solutions falling within the scope of the claims.

## Claims

1. A material feeding apparatus, comprising:
a frame, comprising a base;
a material feeding tray, arranged on the base and movable along a horizontal first direction with respect to the base, wherein the material feeding tray comprises a plurality of material feeding positions, and specifications of workpieces carried by at least two of the material feeding positions are different; and
a fool-proof mechanism, arranged correspondingly to at least one material feeding position on the material feeding tray, wherein the fool-proof mechanism is configured to limit the specifications of the workpieces carried by the material feeding positions.

2. The material feeding apparatus according to claim 1, wherein
the fool-proof mechanism comprises a plurality of dimension limiting members arranged correspondingly to the plurality of material feeding positions, the dimension limiting members being configured to limit dimensions of the workpieces at the material feeding positions along a second direction perpendicular to the first direction.

3. The material feeding apparatus according to claim 2, wherein
the dimension limiting member comprises a limiting block, the second direction is a vertical direction, and the limiting block is located directly above a movement path of the corresponding material feeding position with respect to the base.

4. The material feeding apparatus according to claim 3, wherein
the limiting block is connected with the frame in a manner of being adjustable along the second direction.

5. The material feeding apparatus according to claim 2, wherein
the dimension limiting member comprises a touch sensor, and the touch sensor comprises a contact component and a contact switch, wherein the contact component is movably connected with the frame and is rotatable around a connection point with the frame under the action of an external force, and the contact switch is configured to transmit a touch signal according to a position of the contact component with respect to the connection point.

6. The material feeding apparatus according to claim 5, wherein
the dimension limiting member further comprises a limiting block, the limiting block and the touch sensor are located directly above a movement path of the same material feeding position with respect to the base simultaneously, and a lowest point of the limiting block is lower than a lowest point of the touch sensor.

7. The material feeding apparatus according to any one of claims 1 to 6, wherein the fool-proof mechanism further comprises:
a feature detecting unit, located at an end part of the material feeding position along the first direction, wherein the feature detecting unit is configured to detect whether shape features of the workpieces located at the material feeding position are the same.

8. The material feeding apparatus according to claim 7, wherein
the feature detecting unit comprises a first transmitting part and a first receiving part, the first transmitting part being configured to transmit a first detection signal emitted to a periphery of a preset edge position of the workpiece at the material feeding position, and the first receiving part being configured to receive the first detection signal.

9. The material feeding apparatus according to claim 8, wherein
the feature detecting unit further comprises a first reflecting part configured to reflect the first detection signal;
the first transmitting part and the first receiving part are both located at an end of the material feeding position along the first direction, and the first reflecting part is located at the other end of the material feeding position along the first direction.

10. The material feeding apparatus according to any one of claims 1 to 9, wherein
the fool-proof mechanism further comprises a fixing seat, and the fixing seat is provided with a clamping groove configured to be clamped with the workpiece;
any of the material feeding positions is provided with at least one fixing seat, and dimensions of the clamping grooves of the fixing seats located at the same material feeding position are the same.

11. The material feeding apparatus according to any one of claims 1 to 10, wherein the material feeding apparatus further comprises:
a material shortage detecting unit, located at an end part of the material feeding position along the first direction, the material shortage detecting unit being configured to detect whether the material feeding position is short of materials.

12. The material feeding apparatus according to claim 11, wherein
the material shortage detecting unit comprises a second transmitting part and a second receiving part, the second transmitting part being configured to transmit a second detection signal emitted to a position of the workpiece at the material feeding position, and the second receiving part being configured to receive the second detection signal.

13. The material feeding apparatus according to claim 12, wherein
the material shortage detecting unit further comprises a second reflecting part configured to reflect the second detection signal;
wherein the second transmitting part and the second receiving part are both located at an end of the material feeding position along the first direction, and the second reflecting part is located at the other end of the material feeding position along the first direction.

14. The material feeding apparatus according to any one of claims 1 to 13, wherein
the material feeding tray comprises a pushing state where the material feeding tray is located directly above the base and a pulling state where the material feeding tray moves along the first direction and is at least partially offset from the base;
the material feeding apparatus further comprises a position sensor, the position sensor being fixedly connected to the base and being configured to detect the state of the material feeding tray.

15. The material feeding apparatus according to claim 14, wherein
the position sensor comprises a first proximity switch and a second proximity switch, the first proximity switch and the second proximity switch being located at both ends of the base along the first direction, respectively.

16. A battery production line, comprising:
the material feeding apparatus according to any one of claims 1 to 15; and
an alarm unit, in signal connection with the material feeding apparatus, wherein the alarm unit is configured to transmit an alarm signal in response to a situation that the material feeding apparatus is in an abnormal state; the abnormal state comprises one or more of an abnormal position of the material feeding tray, an incorrect material feeding indication of the fool-proof mechanism, and a material shortage of the material feeding position.

17. A material feeding method applied to the material feeding apparatus according to any one of claims 1 to 15, wherein the method comprises:
pre-adjusting the fool-proof mechanism of the material feeding apparatus according to the specifications of the workpieces;
moving the material feeding tray out of the base along the first direction; and
placing the workpieces at the material feeding positions of the material feeding tray, and moving the material feeding tray into the base.

18. The material feeding method according to claim 17, further comprising:
in response to an incorrect material feeding indication of the fool-proof mechanism of the material feeding apparatus, re-moving the material feeding tray out of the base along the first direction; and
adjusting an incorrect workpiece on the material feeding tray, and re-moving the material feeding tray into the base.

19. The material feeding method according to claim 17 or 18, further comprising:
in response to a correct material feeding indication of the fool-proof mechanism of the material feeding apparatus, transferring the workpiece in the material feeding apparatus to a preset position; and
detecting whether the material feeding position is short of materials; and
in response to a material shortage of the material feeding position, supplementing a workpiece with a corresponding specification to the material feeding position.
